**Europäisches Patentamt**

**European Patent Office**

**Office européen des brevets**

(19)

(11) Veröffentlichungsnummer : **0 477 514 B1**

(12)

# EUROPÄISCHE PATENTSCHRIFT

(45) Veröffentlichungstag der Patentschrift :
**04.08.93 Patentblatt 93/31**

(51) Int. Cl.$^5$ : **A01C 1/04**

(21) Anmeldenummer : **91113454.2**

(22) Anmeldetag : **10.08.91**

(54) **Flächenhafter Saatträger zur Kultivierung von Lichtzutritt benötigenden Saatgutarten unter Verwendung einer mit Klebemitteln beschichteten Trägerfolie und einer Deckfolie.**

(30) Priorität : **25.09.90 DE 4030243**

(43) Veröffentlichungstag der Anmeldung :
**01.04.92 Patentblatt 92/14**

(45) Bekanntmachung des Hinweises auf die
Patenterteilung :
**04.08.93 Patentblatt 93/31**

(84) Benannte Vertragsstaaten :
**AT BE CH DE DK ES FR GB IT LI LU NL SE**

(56) Entgegenhaltungen :
**EP-A- 0 115 956**
**US-A- 2 648 165**
**US-A- 3 046 714**
**US-A- 3 328 916**

(73) Patentinhaber : **SUET SAAT-UND
ERNTETECHNIK GmbH
Strassbourger Strasse 2, Postfach 780
W-3440 Eschwege (DE)**

(72) Erfinder : **Fuss, Ernst-Otto
Lange Strasse 34
W-3441 Berkatal 3 (DE)**
Erfinder : **Hörner, Ernst, Dipl.-Ing.
Kasseler Strasse 28
W-3440 Eschwege (DE)**

(74) Vertreter : **Jahn-Held, Wilhelm W. Dr.Dr.-Ing.
Dipl.-Chem.
Schöne Aussicht 8
W-3513 Staufenberg-Landwehrhagen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die deutsche Patentschrift 26 56 294 beschreibt einen flächenhaften Saatträger mit einer unteren und einer oberen Papierbahn zwischen denen Saatkörner mit einem aufgetragenen Klebstoff aufgebracht sind. Die Zunahme der Wassermenge der beiden Papierbahnen ist auf 1 bis 2 % beschränkt. Dieser Saaträger hat für Licht-zutritt benötigendes Saatgut den Nachteil, dass die prozentuale Keimung bei der Anzucht durch den beschränkten Lichtzutritt verzögert wird.

Dieser Nachteil entsteht dadurch, dass die Verrottung der oberen Papierbahn bei der Befeuchtung mit Giesswasser zeitlich verzögert ist und dadurch langsamer verläuft.

Die DDR- Patentschrift 99 911 macht Saatgutbänder aus wasserlöslichen Pfropf copolymerisaten von Vinylacetat auf Polyäthylenoxiden oder von deren Verseifungsprodukten, von reinen Polyvinylalkoholen der Mischungen aus diesen mit Polyäthylenoxiden oder von Mischungen aus Polyvinylacetaten und Polyäthylenoxiden.

Diese Saatträger sind zur Kultivierung von Lichtzutritt benötigenden Saatgutsorten wegen zu starker Dicke und zu grosser Dehnung und wegen unzureichender Löslichkeit in Wasser nicht geeignet.

Die amerikanische Patentschrift 2,648,165 beschreibt einen Saatträger aus einer Trägerfolie, die aus einer wässrigen Lösung von Kunststoffen, wie aus Polyvinylalkohol, erzeugt wird. Diese Trägerfolie wird zur Filmbildung auf eine Unterlage ausgegossen. In diese plastische, nasse Masse werden die Samenkörner aufgebracht. Danach wird eine weitere gleiche Masse darüber gegossen und dadurch die Samenkörner eingeschlossen. Dieser Saatträger wird danach getrocknet und dabei ausgehärtet.

Bei der Trocknungstemperatur werden die Samenkörner einer schädlichen, höheren Temperatur im feuchten Zustand der Masse ausgesetzt.

Sofern eine Trocknung und Aushärtung bei niedrigerer Temperatur, wie Raumtemperatur erfolgt, erfordert diese einen längeren Zeitraum bei dem die Samenkörner ebenfalls der Feuchte ausgesetzt sind.

Diese Behandlung des Samenträgers führt zur vorzeitigen Alterung der Samenkörner und dadurch zu einer erheblichen Verschlechterung der Lagerfähigkeit. Der Saatträger der Erfindung besteht dagegen aus einer trockenen Trägerfolie mit einem niedrigen, begrenzten Wassergehalt und nur an der Oberfläche. Es wird dadurch eine vorzeitige Alterung und eine Verminderung der Lagerfähigkeit vermieden.

Die amerikanische Patentschrift 3,046,714 beschreibt eine Maschine zur Herstellung von Samenbändern. Es wird die Verwendung von " papierähnlichem Material" beschrieben, welches mit einer transparenten Folie über den Samenkörnern bedeckt wird. Es wird ein relativ schweres Papier als " backendes Material" beschrieben.

Diese Druckschrift beschreibt die Verwendung einer Folie aus Plastic das die Samen sichtbar macht und einen Schutz bis zum Einbringen in die Erde wahrt. Dieses " Sichtbarmachen " hat eine andere Funktion und zwar nur den Füllungsgrad mit Samenkörnern aufzuzeigen. Das verwendete Material soll erst im Boden durch Verrottung langsam abgebaut werden.

Dieses Material muss zu seinem biologischem Abbau erst bei Wasserzutritt quellen und sich dann langsam erst von den Samenkörnern lösen. Das Quellen des Folienmaterials führt ebenfalls zur Behinderung bei der Keimung bis zum Ersticken der Samenkörner.

Diese Samenbänder sind für die Kultivierung " Lichtzutritt benötigenden Saatgutes " mit praktisch sofortigem Zerfall der Trägerfolie im Boden nicht geeignet.

Die europäische Patentschrift EP-A 1 159 56 beschreibt die Behandlung von Gemüse und Samen. Die Behandlung mit filmbildenden Stoffen soll mit regenerierter Cellulose, wie Cellophan, Stärkederivaten, wie vernetzte Amylose,mit Protein, wie gehärteter Gelatine, erfolgen. Dieser Stand der Tecknik macht nur langsam biologisch abbaubare Filme als Coating- Material bekannt.

Diese Druckschrift beschreibt auch die Filmdicke bis 0,1 mm , die bei Befeuchtung im Boden durch Wasseraufnahme quillt und dabei die etwa 3- fache Dicke erhält. Es werden dadurch bei Verwendung solcher Behandlungsmittel keimende Samen im Gas- und Wasseraustausch behindert. Es besteht die Gefahr des Erstickens der Keimlinge.

Diese Nachteile werden durch das Verfahren der Erfindung vermieden.

Gegenstand der Erfindung ist ein flächenhafter Saatträger zur Kultivierung von Lichtzutritt benötigenden Saatgutarten. Aufgabe der Erfindung ist ein flächenhafter Saatträger mit sicherer und optimaler prozentualer Keimung von Pflanzen, vorzugsweise von Zierpflanzen, auf Anzuchtsubstraten.

Eine weitere Aufgabe der Erfindung ist ein flächenhafter Saatträger mit rascher und vollständiger Auflösung der verwendeten Kunststoffolien unter Vermeidung einer mechanischen Verzögerung der Keimung durch die Deckfolie.

Die Lösung der Aufgaben der Erfindung ist im kennzeichnenden Teil des Patentanspruches 1 definiert.

Der Unteranspruch beansprucht eine alternative und bevorzugte Ausgestaltung der Erfindung.

Der flächenhafte Saatträger der Erfindung besteht aus einer mit Klebemittel beschichteten Trägerfolie und einer Deckfolie, wobei der Saatgutträger eine transparente oder eingefärbte Trägerfolie aus wasserlöslichem, trockenem Kunststoff, vorzugsweise aus Polyvinylalkohol, mit einem Wassergehalt der Trägerfolie von 2 - 5 % , vorzugsweise von 3 - 4 %, aufweist, und eine transparente Deckfolie aus dem gleichen Kunststoff wie die Trägerfolie, mit einem Wassergehalt der Deckfolie von 1 - 4 %, vorzugsweise von 1 - 3 %, auf die trockenen Folien gerechnet, aufweist, und beide Folien eine Dicke bis 0,025 mm, vorzugsweise von 0,020 mm, aufweisen, mit einer Dehnfähigkeit zur Anpassung an die Oberfläche der Samenkörner, und mit einer Zugfestigkeit von 10 - 12 N/cm Folienbreite bei einer Dehnung der Deckfolie bis 15 %, vorzugsweise bis 10 %, auf die ursprüngliche Länge gerechnet, und beide Folien in der Weise zur Fixierung der dazwischen aufgebrachten Samenkörner verbunden sind, dass die Trägerfolie mit einem, bei Raumtemperatur druckklebrig bleibenden, dünnen Film von 0,012 - 0,020 mm,vorzugsweise bis 0,015 mm, wasserlöslichem Kleber, vorzugsweise aus dem gleichen wasserlöslichem Kunststoff, beschichtet ist, und die Verbindung beider Folien mit den Samenkörnern durch Andrücken mit Schaumstoffwalzen nach dem Zusammenführen durchführbar ist, und dass danach der Saatträger aufrollbar oder in Teillängen schneidbar ist.

Der flächenhafte Saatträger der Erfindung ist auch dadurch gekennzeichnet, dass die Trägerfolie einen bei Raumtemperatur druckklebrig bleibenden, wasserlöslichen Kleber, vorzugsweise aus dem gleichen Kunststoff, einer Dicke von 0,012 - 0,020 mm, vorzugsweise von 0,012 - 0,15 mm, aufweist, und die Deckfolie ohne eine Klebebeschichtung ist.

Der Flächenhafte Saatträger der Erfindung ist alternativ und bevorzugt auch dadurch gekennzeichnet, dass die Dehnung der Deckfolie bei Samenkörnern bis etwa 1 mm 1 - 2 % und bei Samenkörnern bis etwa 8 mm, 5- 10 %, auf die ursprüngliche Länge gerechnet, beträgt, und wobei die Grösse der Samenkörner in mm ein statistischer Mittelwert ist zur Anpassung der Deckfolie an die Oberfläche der Samenkörner beim Zusammenführen der Folien.

Der Flächenhafte Saatträger der Erfindung ist weiter dadurch gekennzeichnet, dass der wasserlösliche Kleber der Trägerfolie bei einer Dicke von 0,015 mm eine Klebkraft von 2 N/ cm aufweist.

Der Flächenhafte Saatträger der Erfindung ist weiter dadurch alternativ gekennzeichnet, dass der wasserlösliche Kunststoff aus Polyäthylenoxid, Polyacrylsäurestern, Copolymeren von Acrylsäure oder Acrylsäureestern, sowie deren Salzen, wie Acetate, oder deren Alkoholaten, aus Cellulosen, wie Carboxymethylcellulose, aus Polyestern organischer Säuren, wie Polyhydroxybuttersäure, oder Polyhydroxymilchsäure, besteht.

Der Flächenhafte Saatträger der Erfindung ist ausserdem dadurch alternativ gekennzeichnet. dass die wasserlöslichen Folien perforiert oder gelocht sind und zwar zwischen den Samenabständen.

Der Flächenhafte Saatträger der Erfindung ist auch dadurch alternativ gekennzeichnet, dass als Lichtkeimer die Samen folgender Pflanzen verwendet werden:

Impatiens, Petunia, Nicotana, Bellis perennis, Begonia, Lobelia, Salvia sp., Viola.

Der Flächenhafte Saatträger der Erfindung ist auch durch ein Verfahren zu seiner Verwendung gekennzeichnet. Dieses besteht darin, dass der Saatträger mit angepassten Maßen in Anzuchtskisten auf glatt gestrichenes Anzugsubstrat gelegt, danach der Saatträger bei Befeuchtung mit Wasser sich rasch auflöst oder rasch zerfällt, und die dann freiliegenden Samenkörner mit hoher prozentualer Keimung in Abhängigkeit von der Zeit keimen.

Unter Löslichkeit als technischer Effekt des Saatträgers der Erfindung wird das vollständige Inlösunggehen (Auflösen) in Wasser der Trägerfolie und der Deckfolie aus Kunststoff verstanden in einer definierten Menge, ausgedrückt durch die Fläche von 10 x 10 cm x Dicke bis 0,025 mm,in der definierten Menge von 200 ml Wasser unter Rühren in 30-45 sec bei Raumtemperatur.

Unter vollständigem Zerfall der Folien wird das Auflösen der homogenen, festen Masse in nicht verbundene Fein- bzw. Feinst- Partikel bei Benetzung mit 10-20 ml Wasser in 30-45 sec bei Raumtemperatur verstanden.

Die Merkmale der wasserlöslichen Folien stellen eine obligate Auswahl in Bezug auf die Begriffe, deren Werte und Grenzbereiche dar.

Die Dicke der Folien liegt in Kombination mit den anderen physikalischen und technischen Daten um eine Zehnerpotenz niedriger als nach dem Stand der Technik. Eine grössere Dicke führt zu einem nachteiligen Mehrbedarf an Material.

Die grössere Dicke benötigt eine längere Zeit für die Auflösung der Masse. Es liegt darin ein erheblicher Nachteil für die Keimung der Samen.

Die Folien weisen für die Verarbeitung zum flächenhaften Saatträger der Erfindung eine ausreichende Zugfestigkeit auf. Diese kann, insbesondere mit Polyvinylacetat als Material, bis 10 - 12 N/ cm betragen.Eine höhere Festigkeit ist nicht erforderlich.

Die Dehnung ist abhängig vom Wassergehalt der Folien. Ein höherer absoluter Wassergehalt steigert die

EP 0 477 514 B1

Dehnung auf Werte nach dem Stand der Technik.

Die höhere Dehnung führt zur Herabsetzung der Zugfestigkeit und zum Verlust der Formstabilität der Folien.

Die Reissdehnung der Folien aus Kunststoff gemäss der Erfindung liegt jedoch höher und zwar bei 50 - 100 % der ursprünglichen Länge. Mit einem Reissen ist also auch bei der extrem geringen Dicke der Folien bei der technischen Handhabung nicht zu rechnen.

Ein höherer Wassergehalt als der Grenzwert für den Saatträger der Erfindung kann auch aus keimungsphysiologischen Gründen nicht überschritten werden.

Die vollständige Löslichkeit der Folien wird in einer Testmethode ermittelt. Dies gilt ebenfalls für die Lösungsgeschwindigkeit, ausgedrückt in sec.

Der Löslichkeit ist der praktisch vollständige Zerfall der Folien bei der Benetzung mit Wasser äquivalent.

Der Saatträger der Erfindung weist nach der Auflösung oder dem Zerfall durch Zersetzung praktisch keine erkennbaren Rückstände auf, sodass die Samenkörner frei liegen für die unbehinderte Keimung.

Die Folien der Erfindung und der Kleber sind nicht toxisch und daher umweltverträglich.

Die transparente Deckfolie gestattet ungehinderten Lichtdurchtritt.

Saatträger aus Papier nach dem Stand der Technik oder aus dickerer wasserlöslicher Folie sind dagegen weniger oder nicht lichtdurchlässig.

Die Verzögerung der Keimung ist auch dadurch bedingt, dass die nicht oder nur mit Verzögerung aufgelöste Folie gegen den wachsenden Keim einen mechanischen Widerstand leistet.

Bei Saatträgern nach dem Stand der Technik müssen besonders kleinere Keimpflanzen die Deckfolie gegen den mechanischen Widerstand durchstossen. Die Folge davon ist, dass die jeweilige Kulturpflanze zeitlich länger kultiviert werden muss.

Diese wird dadurch auch erst später gewerblich verwendbar.

Der Saatträger der Erfindung ist auch dadurch technisch und wirtschaftlich und biologisch optimal ausgebildet, weil die wasserlöslichen Folien und der Kleber aus dem gleichen Kunststoff bestehen.

Es ist aber auch alternativ möglich, einen anderen Kleber so auszubilden, dass dieser mit anderer chemischer Zusammensetzung die gleichen obligaten Daten und Werte aufweist.

Der Saatträger der Erfindung kann somit auch andere Kleber alternativ verwenden, wenn die Daten der Begriffe angepasst sind.

Durch die Perforation des Saatträgers kann die spezifische Masse verringert und dadurch auch das Auflösen beschleunigt werden.

Der Saatträger der Erfindung und seine Verwendung wird durch das folgende Ausführungsbeispiel beschrieben.

Von einer Rolle wird eine Trägerfolie, Typ PPI 168-020, Hersteller PPI Adhesive Products GmbH, 5253 Lindlar 1, bestehend aus Polyvinylalkohol , in einer Breite bis 400 mm und einer Dicke von 0,020 mm, einer Zugfestigkeit von 10 N/ cm und mit einer Dehnfähigkeit von 10 %, auf die ursprüngliche Länge gerechnet.

Diese Folien erfüllt ebenso wie die Deckfolie aus dem gleichen Material mit den gleichen Daten die Werte gemäss der Erfindung für eine rasche und vollständige Löslichkeit.

Der druckklebrig bleibende Kleber besteht ebenfalls aus dem gleichen Material mit einer Dicke von 0,015 mm.

Unter druckklebrig bleibend wird für den Saatträger der Erfindung das Klebrigbleiben vom Zeitpunkt der Auftragung auf die Trägerfolie über die Zeit des Transportes und der Handhabung bis zum Aufbringen der Samenkörner und bis zum Zusammenfügen mit der Deckfolie unter Druck mit einer Schaumstoffwalze verstanden. Eine solche ist beispielsweise geriffelt.

Die Trägerfolie wird unter eine Ablagevorrichtung hindurchgeführt und darauf kontinuierlich Impatienssamen mit vorgegebenem, kulturbedingtem Abstand von 2 x 2 cm punktgenau abgelegt.

Von einer weiteren Rolle wird die Deckfolie des gleichen Materials, mit gleicher Dicke aber ohne eine Beschichtung mit Kleber in überdeckender Breite auf die mit den Samenkörnern belegte Trägerfolie aufgelegt und danach mit einer Schaumstoffwalze angedrückt, danach in Teillängen geschnitten und aufgerollt.

Sofern der gefertigte Saatträger nicht sogleich zur Verwendung kommt und wenn Transport und Lagerung erforderlich ist, wird dieser in wasserdampfdichte Polyäthylenbeutel verschweist und trocken gelagert. Der Saatträger der Erfindung ist in dieser Verpackung vor Witterungseinflüssen bis zu seiner Verwendung geschützt.

Eine Vergrösserung der Dicke der Deckfolie auf 0,030 mm würde die Keimwirkung bereits um 20% nachteilig verändern.Es würde durch diese Änderung dieses Parameters bereits für diese Samenart das Auflaufen um 2 Tage und damit auch die Pflanzengrösse verzögert.

Die nachstehende Tabelle demonstriert die prozentuale Keimung von Zierpflanzen auf Anzuchtsubstrat als statistische Durchschnittswerte.

4

| Pelargonien- Samen | 7 | 14 Tage |
|---|---|---|
| Normalsaat einzeln abgelegt | 72 | 89 % |
| Saatträger Papier nach dem Stand der Technik | 48 | 85 % |
| Saatträger gemäss der Erfindung | 70 | 92 % |

| Impatiens-Samen | 14 | 24 Tage |
|---|---|---|
| Normalsaat einzeln abgelegt | 24 | 78 % |
| Saatträger nach dem Stand der Technik | 18 | 68 % |
| Saatträger gemäss der Erfindung | 22 | 75 %. |

Diese Tabelle zeigt beispielsweise für diese Samen für den Saatträger der Erfindung den gleichen biologischen Effekt wie für die aufwendige Einzelablage mit Handbetrieb.

Diese zeigt auch den erheblichen biologischen Effekt und damit den wirtschaftlichen Vorteil gegenüber dem Saatträger mit einer oberen und unteren Papierbahn.

Der Saatträger der Erfindung bietet den Vorteil des Keimens und des Aufwachsens von Pflanzen, wie Zierpflanzen, aus lichtempfindlichen Samen in optimal einsatzbarer Qualität in 20 - 25 % grösserer Menge je Anzuchskiste.

Dieser bietet weiter den Vorteil der Herstellung aus nur einem Grundmaterial der Folien und des Klebers auf der Trägerfolie und damit grösserer technischer Einfachheit und erhöhter Wirtschaftlichkeit in der Anwendung.

Dieser bietet weiter den Vorteil einer sicheren Handhabung bei der Herstellung aus den Trägerfolie und der Deckfolie ohne Erzeugung von Ausschuss durch Zerreissen beim Abrollen auf die Ablegevorrichtung.

Dieser bietet den weiteren Vorteil der punktgenauen Fixierung der einzelnen Samenkörner ohne Verschiebung beim Zusammendrücken durch die begrenzte Dehnungsfähigkeit der Folien.

Der Saatträger der Erfindung ist umweltverträglich und erzeugt praktisch keinen Abfall.

**Patentansprüche**

1. Flächenhafter Saatträger zur Kultivierung von Lichtzutritt benötigenden Saatgutarten, bestehend aus einer mit Klebemittel beschichteten Trägerfolie und einer Deckfolie, wobei der Saatgutträger eine transparente oder eingefärbte Trägerfolie aus wasserlöslichem, trockenem Kunststoff, vorzugsweise aus Polyvinylalkohol, mit einem Wassergehalt der Trägerfolie von 2 - 5 % , vorzugsweise von 3 - 4 %, aufweist, und eine transparente Deckfolie aus dem gleichen Kunststoff wie die Trägerfolie, mit einem Wassergehalt der Deckfolie von 1 - 4 %, vorzugsweise von 1 - 3 %, auf die trockenen Folien gerechnet, aufweist, und beide Folien eine Dicke bis 0,025 mm, vorzugsweise von 0,020 mm, aufweisen, mit einer Dehnfähigkeit zur Anpassung an die Oberfläche der Samenkörner, und mit einer Zugfestigkeit von 10 - 12 N/cm Folienbreite bei einer Dehnung der Deckfolie bis 15 %, vorzugsweise bis 10 %, auf die ursprüngliche Länge gerechnet, und beide Folien in der Weise zur Fixierung der dazwischen aufgebrachten Samenkörner verbunden sind, dass die Trägerfolie mit einem, bei Raumtemperatur druckklebrig bleibenden, dünnen Film von 0,012 - 0,020 mm, vorzugsweise bis 0,015 mm, wasserlöslichem Kleber, vorzugsweise aus dem gleichen wasserlöslichem Kunststoff, beschichtet ist, und die Verbindung beider Folien mit den Samenkörnern durch Andrücken mit Schaumstoffwalzen nach dem Zusammenführen durchführbar ist, und dass danach der Saatträger aufrollbar oder in Teillängen schneidbar ist.

2. Flächenhafter Saatträger nach Anspruch 1, dadurch gekennzeichnet, dass die Trägerfolie einen bei Raumtemperatur druckklebrig bleibenden, wasserlöslichen Kleber, vorzugsweise aus dem gleichen Kunststoff, einer Dicke von 0,012 - 0,020 mm, vorzugsweise von 0,012 - 0,15 mm, aufweist, und die Deckfolie ohne eine Klebebeschichtung ist.

3. Flächenhafter Saatträger nach den Ansprüchen 1 bis 2, dadurch gekennzeichnet, dass die Dehnung der Deckfolie bei Samenkörnern bis etwa 1 mm 1 - 2 %, und bei Samenkörnern bis etwa 8 mm, 5 - 10 %, auf die ursprüngliche Länge gerechnet, beträgt und wobei die Grösse der Samenkörner in mm ein statistischer Mittelwert ist, zur Anpassung der Deckfolie an die Oberfläche der Samenkörner beim Zusammenführen der Folien.

4. Flächenhafter Saatträger nach den Ansprüchen 1 bis 3, dadurch gekennzeichnet, dass der wasserlösliche Kleber der Trägerfolie bei einer Dicke von 0,015 mm eine Klebkraft von 2 N/ cm aufweist.

5. Flächenhafter Satträger nach den Ansprüchen 1 bis 4, dadurch gekennzeichnet, dass der wasserlösliche Kunststoff aus Polyäthylenoxid, Polyacrylsäurestern, Copolymeren von Acrylsäure oder Acrylsäureestern, sowie deren Salzen, wie Acetate, oder deren Alkoholaten, aus Cellulosen, wie Carboxymethylcellulose, aus Polyestern organischer Säuren, wie Polyhydroxybuttersäure, oder Polyhydroxymilchsäure, besteht.

6. Flächenhafter Saatträger nach Anspruch 1, gekennzeichnet durch eine vollständige Löslichkeit der Folien, im Format von 10 x 10 cm bei 17- 20°C in 200 ml Wasser unter Rühren ermittelt, oder mit einem vollständigen Zerfall der Folien bei Benetzung mit 10 - 20 ml Wasser und zwar bei Löslichkeit oder Zerfall in bis 30- 45 sec.

7. Flächenhafter Saatträger nach den Ansprüchen 1 bis 6, dadurch gekennzeichnet, dass die wasserlöslichen Folien perforiert oder gelocht sind und zwar zwischen den Samenabständen.

8. Flächenhafter Saatträger nach den Ansprühen 1 bis 7, dadurch gekennzeichnet, dass als Lichtkeimer die Samen folgender Pflanzen verwendet werden:
Impatiens, Petunia, Nicotana, Bellis perennis, Begonia, Lobelia, Salvia sp., Viola.

9. Verfahren zur Verwendung des Saatträgers nach den Ansprüchen 1 bis 8, dadurch gekennzeichnet, dass der Saatträger mit angepassten Maßen in Anzugskisten auf glatt gestrichenes Anzugsubstrat gelegt, danach der Saatträger bei Befeuchtung mit Wasser sich rasch auflöst oder rasch zerfällt, und die dann freiliegenden Samenkörner mit hoher prozentualer Keimung in Abhängigkeit von der Zeit keimen.

## Claims

1. A laminar seed carrier for the cultivation of types of seed which require admittance of light, consisting of a carrier film coated with adhesive and a cover film, the seed carrier having a transparent or dyed carrier film of water-soluble, dry plastic, preferably of polyvinyl alcohol, having a water content of the carrier film of 2 - 5%, preferably of 3 - 4%, and a transparent cover film of the same plastic as the carrier film, having a water content of the cover film of 1 - 4%, preferably of 1 - 3%, calculated relative to the dry films, and both films have a thickness of up to 0.025 mm, preferably of 0.020 mm, with extensibility for adapting to the surface of the grains, and with a tensile strength of 10 - 12 N/cm film width for an expansion of the cover film of up to 15%, preferably up to 10%, calculated relative to the original length, and both films are joined for fixing the grains applied therebetween such that the carrier film is coated with a thin film of 0.012 - 0.020 mm, preferably of up to 0.015 mm, water-soluble adhesive, preferably made from the same water-soluble plastic, which remains tacky at room temperature, and the joining of both films to the grains can be performed by pressing with foam rollers after they have been brought together, and that thereafter the seed carrier can be rolled up or cut into partial lengths.

2. A laminar seed carrier according to Claim 1, characterised in that the carrier film has a water-soluble adhesive, preferably made of the same plastic, of a thickness of 0.012 - 0.020 mm, preferably of 0.012 - 0.15 mm, which remains tacky at room temperature, and the cover film is without an adhesive coating.

3. A laminar seed carrier according to Claims 1 to 2, characterised in that the expansion of the cover film for grains of up to about 1 mm is 1 - 2%, and for grains of up to about 8 mm is 5 - 10%, calculated relative to the original length, and the size of the grains in mm being a statistical mean value, for adapting the cover film to the surface of the grains when the films are brought together.

4. A laminar seed carrier according to Claims 1 to 3, characterised in that the water-soluble adhesive of the carrier film has an adhesive force of 2 N/cm for a thickness of 0.015 mm.

5. A laminar seed carrier according to Claims 1 to 4, characterised in that the water-soluble plastic consists of polyethylene oxide, polyacrylic acid esters, copolymers of acrylic acid or acrylic acid esters, and the salts thereof, such as acetates, or the alcoholates thereof,
of celluloses, such as carboxymethylcellulose, of polyesters of organic acids, such as polyhydroxybutyric acid, or polyhydroxylactic acid.

6. A laminar seed carrier according to Claim 1, characterised by complete solubility of the films, determined in a format of 10 x 10 cm at 17 - 20°C in 200 ml water with stirring, or with complete decomposition of the films upon wetting with 10 - 20 ml water, namely with solubility or decomposition in up to 30 - 45 sec.

7. A laminar seed carrier according to Claims 1 to 6, characterised in that the water-soluble films are perforated or holed, namely between the spacings between the seeds.

8. A laminar seed carrier according to Claims 1 to 7, characterised in that the seeds of the following plants are used as light germs:
impatiens, petunia, nicotiana, bellis perennis, begonia, lobelia, salvia sp., viola.

9. A method for using the seed carrier according to Claims 1 to 8, characterised in that the seed carrier is laid with suitable dimensions in propagation boxes on propagation substrate which is painted smooth, then the seed carrier dissolves quickly or decomposes quickly upon moistening with water, and the grains which are then freed germinate with a high percentage of germination dependent on the time.

## Revendications

1. Support plat de graines pour la culture de variétés de graines demandant un apport de lumière, constitué d'une feuille-support enduite de colle et d'une feuille de couverture, le support de graines présentant une feuille-support transparente ou colorée en matière synthétique sèche, soluble dans l'eau, de préférence en alcool de polyvinyle, la feuille support présentant une teneur en eau de 2 - 5 %, et de préférence de 3 - 4 %, ainsi qu'une feuille de couverture transparente en la même matière synthétique que la feuille-support et présentant une teneur en eau de 1 - 4 %, et de préférence de 1 - 3 %, ces pourcentages étant calculés para rapport au poids des feuilles sèches, et les deux feuilles présentant une épaisseur de 0,025 mm, et de préférence de 0,020 mm ainsi qu'une étirabilité leur permettant de s'adapter à la surface des graines de semence et une résistance à la traction de 10 - 12 N/cm de largeur de feuille pour un allongement pouvant atteindre 15 %, et de préférence 10 %, de la feuille de couverture, ces pourcentages étant calculés par rapport à la longueur initiale de la feuille, les deux feuilles étant en vue de la fixation des graines de semence disposées entre elles reliées de telle sorte que la feuille-support est enduite d'une mince pellicule, de 0,012 - 0,020 mm, et de préférence de 0,015 mm au plus, de colle soluble dans l'eau, de préférence une colle de la même matière synthétique soluble dans l'eau, restant adhérente sous pression à température ambiante, et la liaison des deux feuilles aux graines de semence pouvant être effectuée par compression entre des rouleaux de mousse après leur assemblage, le support de graines pouvant ensuite être enroulé ou découpé en longueurs.

2. Support plat de graines selon la revendication 1, caractérisé en ce que la feuille-support présente une mince pellicule, de 0,012 - 0,020 mm, et de préférence de 0,015 mm au plus, de colle soluble dans l'eau, de préférence une colle de la même matière synthétique, restant adhérente sous pression à température ambiante, la feuille de couverture n'étant pas enduite de colle.

3. Support plat de graines selon les revendications 1 à 2, caractérisé en ce que l'allongement de la feuille de couverture est de 1 - 2 % lorsque les graines de semence atteignent environ 1 mm, et de 5 - 10 % lorsque les graines de semence atteignent environ 8 mm, ces pourcentages étant calculés sur base de la longueur initiale, la dimension des graines de semence en millimètres étant une valeur statistique, pour que la feuille de couverture s'adapte à la surface des graines de semence lors de l'assemblage des feuilles.

4. Support de graines plat selon les revendications 1 à 3, caractérisé en ce que la colle soluble dans l'eau présente pour une épaisseur de 0,015 mm un pouvoir adhésif de 2 N/cm.

5. Support de graines plat selon les revendications 1 à 4, caractérisé en ce que la matière synthétique soluble dans l'eau est constituée d'oxyde de polyéthylène, d'esters d'acide polyacrylique, de copolymères d'acide acrylique ou d'esters d'acide acrylique, ainsi que de leurs sels, tels que des acétates, ou de leurs alcoolats, ou de celluloses, telles que la carboxyméthylcellulose, de polyesters d'acides organiques, tels que l'acide polyhydroxybutyrique ou l'acide polyhydroxylactique.

6. Support de graines plat selon la revendication 1, caractérisé en ce que des feuilles d'un format de 10 x 10 cm se dissolvent complètement dans 200 ml d'eau à 17 - 20°C sous agitation, ou se désagrègent complètement lorsque mouillées à l'aide de 10 - 20 ml d'eau, la dissolution ou la désagrégation apparaissant en 30- 45 secondes au plus.

7. Support de graines plat selon les revendications 1 à 6, caractérisé en ce que les feuilles solubles dans l'eau sont perforées ou ajourées dans les espaces séparant les semences.

8. Support de graines plat selon les revendications 1 à 7, caractérisé en ce que l'on utilise pour germination à la lumière les semences des plantes suivantes: Impatiens, Petunia, Nicotana, Bellis perennis, Begonia, Lobelia, Salvia sp., Viola.

9. Procédé d'utilisation du support de graines selon les revendications 1 à 8, caractérisé en ce que le support de graines est déposé par des moyens appropriés dans des caisses de germination, sur un substrat de germination bien égalisé, qu'ensuite le support de graines se dissout ou se désagrège rapidement par humidification à l'eau, les graines de semence alors libérées germant au cours du temps, avec un taux de germination élevé.